# DEMANDE DE BREVET EUROPEEN

(11) **EP 3 415 366 A1**
(43) Date de publication de la demande: **19.12.2018**
(21) Numéro de dépôt: 18176357.4
(22) Date de dépôt: 06.06.2018
(51) Int. Cl.: B60P 3/39, A47C 17/80

(54) **SYSTEME DE LITS SUPERPOSES POUR VEHICULE DE LOISIRS ET VEHICULE DE LOISIRS ASSOCIE**

(30) Priorité: 09.06.2017 FR 1755155
(71) Demandeur: Trigano VDL, 75019 Paris (FR)
(72) Inventeur: CLEMENSON, Jérôme, 07290 ARDOIX (FR); PRAT, Isabelle, 26250 LIVRON (FR)
(74) Mandataire: Gevers & Orès

(57) **Abrégé**

L'invention concerne un système (10) de lits superposés pour véhicule de loisirs (100) comprenant :
- un lit inférieur (11),
- des moyens d'entraînement (12, 13a, 13b, 13c, 13d) conçus pour entraîner en translation verticale le lit inférieur entre une position haute, dite position escamotée, et une position basse, dite position déployée,
- un lit supérieur (14) superposé au-dessus le lit inférieur,
le lit supérieur étant conçu pour se déplacer en translation verticale entre une position haute, dite position escamotée, et une position basse, dite position déployée, sous l'effet de son poids,
le lit inférieur étant conçu pour entraîner en translation verticale le lit supérieur entre sa position escamotée et sa position déployée, lorsque le lit inférieur est lui-même entraîné en translation verticale entre sa position escamotée et sa position déployée,
- des moyens de guidage (15, 16) indépendants des moyens d'entraînement et conçus pour guider en translation verticale le lit inférieur et le lit supérieur.

## Description

### DOMAINE TECHNIQUE

L'invention concerne le domaine des véhicules de loisirs, tels que les camping-cars ou les caravanes. Plus précisément, l'invention concerne un système de lits superposés pour véhicule de loisirs et un véhicule de loisirs comprenant un tel système de lits superposés.

### ETAT DE L'ART

Il est connu de l'art antérieur des systèmes de lits superposés pour véhicule de loisirs.

De manière classique, ces systèmes comprennent un lit inférieur, un lit supérieur superposé sur le lit inférieur ainsi que des moyens permettant de déplacer, par rotation ou par translation, chacun des lits inférieur et supérieur entre une position déployée et une position escamotée. Ces moyens assurent aussi le guidage de chacun des lits inférieur et supérieur entre les positions déployée et escamotée.

La position déployée des lits inférieur et supérieur est prévue pour la nuit, un utilisateur pouvant se coucher dans chacun des lits inférieur et supérieur. La position escamotée des lits inférieur et supérieur est prévue pour le jour, un espace de vie étant libéré.

Or, les moyens mis en oeuvre pour déplacer les lits inférieur et supérieur entre les positions déployée et escamotée sont souvent compliqués. Ils comprennent de nombreuses pièces ce qui rend fastidieux le montage du système à l'intérieur du véhicule de loisirs. Ils sont aussi lourds, ce qui augmente la consommation énergétique du véhicule de loisirs ou du véhicule tracteur.

Par ailleurs, ils rendent le système peu adaptable en fonction du véhicule de loisirs dans lequel il est installé, ce qui laisse peu de flexibilité pour agencer de manière optimale l'intérieur du véhicule de loisirs.

### PRESENTATION DE L'INVENTION

La présente invention a pour but de pallier ces inconvénients en proposant un système de lits superposés pour véhicule de loisirs simple à monter, léger et adaptable en fonction du véhicule de loisirs dans lequel il est installé.

Plus précisément, l'invention a pour objet un système de lits superposés pour véhicule de loisirs comprenant :
- un lit inférieur agencé horizontalement par rapport à une direction verticale et comprenant deux bords longitudinaux, s'étendant globalement suivant un axe d'extension longitudinale et deux bords transversaux, s'étendant transversalement par rapport à l'axe d'extension longitudinale,
- des moyens d'entraînement conçus pour entraîner en translation verticale le lit inférieur entre une position haute, dite position escamotée, et une position basse, dite position déployée, les moyens d'entraînement comprenant :
   ∘ un arbre d'entraînement destiné à être monté sur le véhicule de loisirs, l'arbre d'entraînement étant conçu pour tourner autour d'un axe de rotation horizontal, agencé parallèlement ou perpendiculairement par rapport à l'axe d'extension longitudinale du lit inférieur, dans un premier sens de rotation et dans un deuxième sens de rotation opposé,
   ∘ une pluralité de sangles ou câbles ou chaînes fixés d'une part à l'arbre d'entraînement et d'autre part aux bords longitudinaux et/ou transversaux du lit inférieur, de sorte à suspendre le lit inférieur à l'arbre d'entraînement, les sangles, câbles ou chaînes s'enroulant et se déroulant autour de l'arbre d'entraînement, respectivement lorsque l'arbre d'entraînement tourne autour de l'axe de rotation dans le premier sens de rotation et dans le deuxième sens de rotation, de sorte à entraîner le lit inférieur en translation verticale vers la position escamotée et vers la position déployée respectivement,
- un lit supérieur agencé horizontalement et superposé au-dessus du lit inférieur, le lit supérieur comprenant deux bords longitudinaux dont chacun est agencé verticalement en regard de l'un des bords longitudinaux du lit inférieur, et deux bords transversaux dont chacun est agencé verticalement en regard de l'un des bords transversaux du lit inférieur,
   le lit supérieur étant conçu pour se déplacer en translation verticale entre une position haute, dite position escamotée, et une position basse, dite position déployée, sous l'effet de son poids,
   le lit inférieur étant conçu pour entraîner en translation verticale le lit supérieur entre sa position escamotée et sa position déployée, lorsque le lit inférieur est entraîné en translation verticale entre sa position escamotée et sa position déployée,
- des moyens de guidage en translation du lit inférieur et du lit supérieur, lorsque les lits inférieur et supérieur se déplacent en translation verticale entre leurs positions escamotée et déployée, les moyens de guidage étant indépendants des moyens d'entraînement.

Selon différents modes de réalisation de l'invention, qui pourront être pris ensemble ou séparément :
- l'arbre d'entraînement est situé au-dessus des lits inférieur et supérieur ;
- les sangles, câbles ou chaînes sont situés au-dessus du lit inférieur ;
- les moyens de guidage sont conçus pour guider en translation verticale chacun des lits inférieur et supérieur par l'intermédiaire d'un de leurs bords longitudinaux ou transversaux, les bords des lits inférieur et supérieur guidés en translation par les moyens de guidage étant agencés verticalement en regard l'un de l'autre,
- les bords des lits inférieur et supérieur guidés en translation par les moyens de guidage sont les bords longitudinaux,
- l'axe de rotation de l'arbre d'entraînement est agencé orthogonalement par rapport aux bords du lit inférieur et du lit supérieur qui sont guidés en translation par les moyens de guidage,
- l'axe de rotation de l'arbre d'entraînement est agencé orthogonalement à l'axe d'extension longitudinale du lit inférieur et/ou est aligné verticalement avec l'un des bords transversaux du lit inférieur,
- le système comprend deux paires de deux sangles, câbles ou chaînes, une première paire étant fixée à l'un des bords du lit inférieur agencés globalement parallèlement à l'axe de rotation de l'arbre d'entraînement, une deuxième paire étant fixée à l'autre des bords du lit inférieur agencés globalement parallèlement à l'axe de rotation de l'arbre d'entraînement,
- le système comprend des premiers moyens de renvoi conçus pour renvoyer la deuxième paire de sangles, câbles ou chaînes provenant de l'arbre d'entraînement, verticalement en direction du bord longitudinal ou transversal auquel elle est fixée, les premiers moyens de renvoi étant situés au-dessus du lit inférieur,
- le système comprend des deuxièmes moyens de renvoi conçus pour renvoyer la deuxième paire de sangles, câbles ou chaînes provenant de l'arbre d'entraînement, horizontalement en direction des premiers moyens de renvoi, les deuxièmes moyens de renvoi étant situés au-dessus de l'arbre d'entraînement,
- les deuxièmes moyens de renvoi sont conçus pour recevoir verticalement la deuxième paire de sangles, câbles ou chaînes provenant de l'arbre d'entraînement,
- la deuxième paire de sangles, câbles ou chaînes est fixée au bord longitudinal ou transversal du lit inférieur opposé au bord longitudinal ou transversal situé verticalement en regard de l'arbre d'entraînement ;
- le lit supérieur est agencé à distance du lit inférieur, lorsque le lit inférieur et le lit supérieur sont en position déployée, le système comprenant en outre des moyens de blocage conçus pour bloquer le lit supérieur en translation verticale vers le bas, lorsque le lit supérieur atteint sa position déployée.

L'invention a encore pour objet un véhicule de loisirs s'étendant d'arrière en avant suivant une direction longitudinale horizontale, le véhicule de loisirs comprenant un plancher horizontal, une paroi transversale arrière s'étendant depuis le plancher et agencée sensiblement perpendiculairement par rapport à la direction longitudinale et deux parois longitudinales s'étendant depuis le plancher de part et d'autre de la paroi transversale arrière et agencées sensiblement parallèlement par rapport à la direction longitudinale, le véhicule de loisirs comprenant en outre un système de lits superposés tel que précédemment décrit.

Selon différents modes de réalisation de l'invention, qui pourront être pris ensemble ou séparément :
- l'axe d'extension longitudinale du lit inférieur est agencé perpendiculairement par rapport à la direction longitudinale du véhicule de loisirs,
- le système est installé dans une partie arrière du véhicule de loisirs,
- l'arbre d'entraînement est monté sur l'une des parois longitudinales du véhicule de loisirs,
- les moyens de guidage comprennent au moins un ensemble de guidage comprenant lui-même un rail vertical de guidage monté sur la paroi transversale arrière du véhicule de loisirs et une paire de patins de guidage conçue pour coopérer avec le rail de guidage, un premier patin de guidage étant monté sur l'un des bords longitudinaux ou transversaux du lit inférieur, le deuxième patin de guidage étant monté sur le bord du lit supérieur agencé verticalement en regard du bord du lit inférieur sur lequel est monté le premier patin de guidage.

### PRESENTATION DES FIGURES

D'autres caractéristiques et avantages de l'invention apparaîtront à la lecture de la description détaillée qui suit pour la compréhension de laquelle on se reportera aux figures annexées parmi lesquelles :
- la figure 1 est une vue partielle en perspective d'un véhicule de loisirs comprenant un système de lits superposés selon un mode de réalisation de l'invention, les lits inférieur et supérieur du système étant chacun en position déployée ;
- la figure 2 est une vue de détail du système de lits superposés illustré à la figure 1 ;
- la figure 3 est une vue partielle en perspective du véhicule de loisirs illustré à la figure 1, les lits inférieur et supérieur du système étant chacun en position escamotée.

### DESCRIPTION DETAILLEE

On adoptera à titre non limitatif un repère orthogonal comprenant une direction longitudinale horizontale X orientée vers l'avant du véhicule, une direction transversale horizontale Y et une direction verticale Z orientée vers le haut.

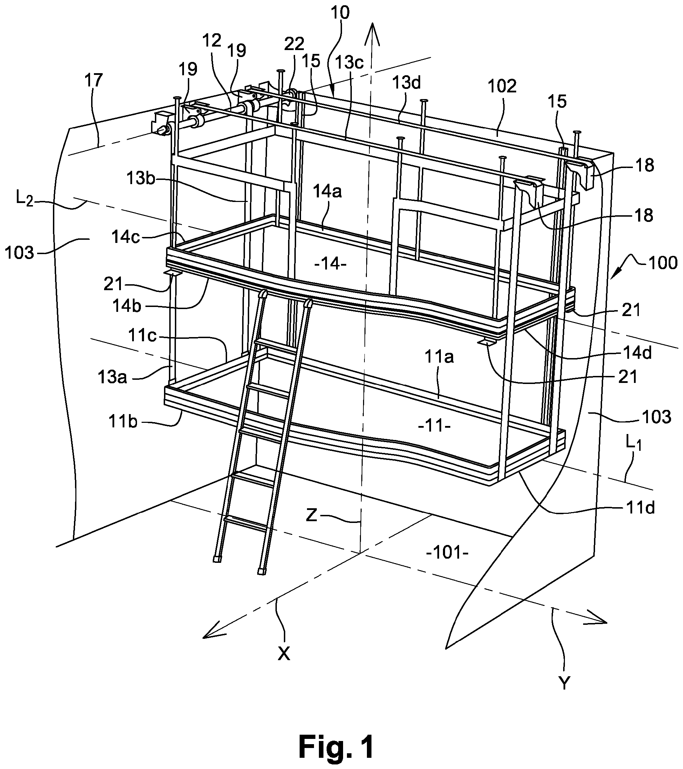

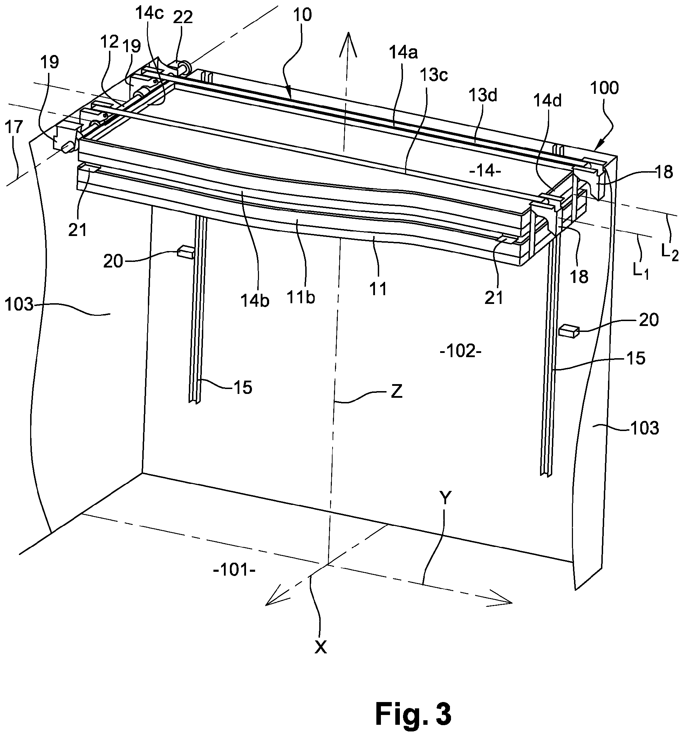

Les figures 1 et 3 montrent un véhicule de loisirs 100 s'étendant d'arrière en avant suivant la direction longitudinale X et comprenant un système 10 de lits superposés selon un mode de réalisation de l'invention.

Le véhicule de loisirs 100 peut être un camping-car ou une caravane.

Le véhicule de loisirs 100 comprend par exemple un plancher 101 horizontal, une paroi transversale arrière 102 s'étendant verticalement depuis le plancher 101, et deux parois longitudinales 103 s'étendant verticalement depuis le plancher 101, de part et d'autre de la paroi transversale arrière 102. Le véhicule de loisirs 100 peut encore comprendre un plafond (non représenté) ou pavillon opposé au plancher 101 par rapport à la paroi transversale arrière 102 et aux parois longitudinales 103.

Le plancher 101, la paroi transversale arrière 102, les parois longitudinales 103 et le cas échéant le plafond définissent ensemble un espace intérieur du véhicule de loisirs 100 dans lequel est installé le système 10.

Le système 10 est ici installé dans une partie arrière du véhicule de loisirs 100.

En variante, le système 10 est installé dans une partie avant du véhicule de loisirs 100.

Le système 10 comprend un lit inférieur 11, des moyens d'entraînement 12, 13a, 13b, 13c, 13d, un lit supérieur 14 et des moyens de guidage 15, 16.

Le lit inférieur 11 est agencé horizontalement par rapport à la direction verticale Z.

Le lit inférieur 11 comprend deux bords 11a, 11b, dits bords longitudinaux, s'étendant globalement suivant un axe d'extension longitudinale L₁ dudit lit inférieur 11 et deux bords 11c, 11d, dit bords transversaux, s'étendant transversalement par rapport à l'axe d'extension longitudinale L₁.

L'axe d'extension longitudinale L₁ du lit inférieur 11 est par exemple agencé perpendiculairement à la direction longitudinale X. Cela permet de limiter l'encombrement du lit inférieur 11 à l'intérieur du véhicule de loisirs 100 suivant la direction longitudinale X.

En variante, l'axe d'extension longitudinale L₁ du lit inférieur 11 peut aussi être agencé parallèlement à la direction longitudinale X.

Les moyens d'entraînement 12, 13a, 13b, 13c, 13d sont conçus pour entraîner en translation le lit inférieur 11 suivant la direction verticale Z entre une position haute, dite position escamotée, et une position basse, dite position déployée, du lit inférieur 11.

La position escamotée correspond à une position prévue pour la journée, un ou des utilisateurs pouvant se déplacer dans le véhicule de loisirs 100 sous le lit inférieur 11.

La position déployée correspond à une position prévue pour la nuit, un ou des utilisateurs pouvant se coucher dans le lit inférieur 11.

Les moyens d'entraînement 12, 13a, 13b, 13c, 13d comprennent un arbre d'entraînement 12 destiné à être monté sur le véhicule de loisirs 100.

L'arbre d'entraînement 12 est situé au-dessus des lits inférieur 11 et supérieur 14.

L'arbre d'entraînement 12 ne fait donc pas partie de la structure du lit inférieur 11. Cela permet de gagner en épaisseur du lit inférieur 11, mais aussi de simplifier sa structure et de l'alléger.

L'arbre d'entraînement 12 est conçu pour tourner autour d'un axe de rotation 17 horizontal, agencé parallèlement ou perpendiculairement par rapport à l'axe d'extension longitudinale L₁ du lit inférieur 11, dans un premier sens de rotation et dans un deuxième sens de rotation opposé.

L'axe de rotation 17 est de préférence agencé perpendiculairement à l'axe d'extension longitudinale L₁ du lit inférieur 11. L'axe de rotation 17 est ainsi agencé parallèlement par rapport aux bords transversaux 11c, 11d du lit inférieur 11.

Cela permet de limiter la longueur de l'arbre d'entraînement 12 suivant l'axe de rotation 17 et ainsi de réduire l'encombrement du système 10. En particulier, lorsque l'axe d'extension longitudinale L₁ du lit inférieur 11 est agencé perpendiculairement par rapport à la direction longitudinale X du véhicule de loisirs 100, cela permet de réduire l'encombrement du système 10 suivant cette direction longitudinale X.

Cela peut en outre permettre de libérer au moins l'un 11b des bords longitudinaux du lit inférieur 11 pour l'accès au lit inférieur 11.

L'axe de rotation 17 de l'arbre d'entraînement 12 peut en outre être aligné verticalement avec l'un 11c des bords transversaux du lit inférieur 11. L'arbre d'entraînement 12 est ainsi agencé verticalement en regard de l'un 11c des bords transversaux du lit inférieur 11.

L'arbre d'entraînement 12 peut alors être monté rotatif sur l'une des parois longitudinales 103 du véhicule de loisirs 100, ladite paroi longitudinale 103 étant située en regard du bord transversal 11c avec lequel l'axe de rotation 17 de l'arbre d'entraînement 12 est aligné.

Les moyens d'entraînement 12, 13a, 13b, 13c, 13d comprennent encore une pluralité de sangles 13a, 13b, 13c, 13d. On entend par « sangle », une bande large et plate. Les sangles sont par exemple réalisées en fibres plastiques, notamment en fibres de polyester, tissées. Ainsi, les sangles sont particulièrement légères.

En variante, les sangles 13a, 13b, 13c, 13d peuvent être remplacées par des câbles ou des chaînes. On entend par « câble », un cordage en fibres végétales, synthétiques ou en fils métalliques. On entend par « chaîne », une suite de maillons de métal ou de plastique, engagés les uns dans les autres ou articulés entre eux.

Les sangles 13a, 13b, 13c, 13d sont fixées d'une part à l'arbre d'entraînement 12 et d'autre part aux bords longitudinaux 11a, 11b et/ou transversaux 11c, 11d du lit inférieur 11. Autrement dit, les sangles 13a, 13b, 13c, 13d sont fixées par une première extrémité à l'arbre d'entraînement 12 et par une deuxième extrémité opposée aux bords longitudinaux 11a, 11b et/ou transversaux 11c, 11d du lit inférieur 11.

Les sangles 13a, 13b, 13c, 13d sont situées au-dessus du lit inférieur 11.

Le lit inférieur 11 est ainsi suspendu à l'arbre d'entraînement 12 par l'intermédiaire des sangles 13a, 13b, 13c, 13d.

Le lit inférieur 11 est suspendu à l'arbre d'entraînement 12 par l'intermédiaire des sangles 13a, 13b, 13c, 13d à la fois lorsqu'il est dans les positions escamotée et déployée et lorsqu'il se déplace en translation suivant la direction verticale Z entre ses positions escamotée et déployée.

Les sangles 13a, 13b, 13c, 13d s'enroulent autour de l'arbre d'entraînement 12, lorsque l'arbre d'entraînement 12 tourne autour de l'axe de rotation 17 dans le premier sens de rotation, de sorte à entraîner un déplacement en translation du lit inférieur 11 suivant la direction verticale Z vers sa position escamotée.

En outre, les sangles 13a, 13b, 13c, 13d se déroulent de l'arbre d'entraînement 12, lorsque l'arbre d'entraînement 12 tourne autour de l'axe de rotation 17 dans le deuxième sens de rotation, de sorte à entraîner un déplacement en translation du lit inférieur 11 suivant la direction verticale Z vers sa position déployée.

Les sangles 13a, 13b, 13c, 13d sont par exemple fixées à l'arbre d'entraînement 12 à distance les unes des autres. Les sangles 13a, 13b, 13c, 13d sont donc réparties le long de l'arbre d'entraînement 12. De cette manière, les sangles 13a, 13b, 13c, 13d s'enroulent et se déroulent simultanément autour de l'arbre d'entraînement 12 les unes des autres.

Le système 10 comprend par exemple deux paires de sangles 13a, 13b, 13c, 13d, une première paire 13a, 13b étant d'une part fixée à l'arbre d'entraînement 12 et d'autre part à l'un 11c des bords 11c, 11d du lit inférieur 11 agencés globalement parallèlement à l'axe de rotation 17 de l'arbre d'entraînement 12, une deuxième paire 13c, 13d étant d'une part fixée à l'arbre d'entraînement 12 et d'autre part à l'autre 11d des bords 11 d, 11c agencés globalement parallèlement à l'axe de rotation 17 de l'arbre d'entraînement 12.

Les sangles 13a, 13b, 13c, 13d sont par exemple fixées aux bords transversaux 11c, 11d du lit inférieur 11.

Les sangles 13a, 13b ; 13c, 13d de chaque paire sont fixées à proximité de coins opposés du lit inférieur 11, lesdits coins étant définis entre les bords longitudinaux 11a, 11b et les bords transversaux 11c, 11d dudit lit inférieur 11.

Les sangles 13a, 13b, 13c, 13d permettent d'assurer le maintien horizontal du lit inférieur 11, à la fois lorsque le lit inférieur 11 est dans ses positions escamotée et déployée et qu'il se déplace en translation suivant la direction verticale Z entre ses positions escamotée et déployée.

Le lit supérieur 14 est agencé horizontalement et il est superposé au-dessus du le lit inférieur 11 suivant la direction verticale Z. Les lits inférieur 11 et supérieur 14 sont donc alignés l'un avec l'autre suivant la direction verticale Z.

Le lit supérieur 14 comprend deux bords 14a, 14b, dits bords longitudinaux, chacun agencés verticalement en regard d'un des bords longitudinaux 11a, 11b du lit inférieur 11 et deux bords 14c, 14d, dit bords transversaux, chacun agencés verticalement en regard de l'un des bords transversaux 11c, 11d du lit inférieur 11.

Les bords longitudinaux 14a, 14b du lit supérieur 14 s'étendent globalement suivant un axe d'extension longitudinale L₂ du lit supérieur 14, parallèle à l'axe d'extension longitudinale L₁ du lit inférieur 11.

Le lit supérieur 14 est encore conçu pour se déplacer en translation suivant la direction verticale Z entre une position haute, dite position escamotée, et une position basse, dite position déployée, du lit supérieur 14 sous l'effet de son poids. Autrement dit, le déplacement en translation verticale du lit supérieur 14 de haut en bas est réalisé sous l'effet de la force de pesanteur ou gravité. Ainsi, contrairement au lit inférieur 11, le lit supérieur 14 n'est pas suspendu à l'arbre d'entraînement 12 par l'intermédiaire des sangles 13a, 13b, 13c, 13d et l'enroulement/déroulement des sangles 13a, 13b, 13c, 13d autour de l'arbre d'entraînement 12 n'a pas d'effet direct sur les déplacements en translation verticale du lit supérieur 14.

C'est le lit inférieur 11 qui est conçu pour entraîner en translation verticale le lit supérieur 14 entre sa position haute escamotée et sa position basse déployée, lorsque le lit inférieur 11 est lui-même même entraîné en translation verticale entre sa position haute escamotée et sa position basse déployée.

De cette manière, lorsque le lit inférieur 11 est entraîné en translation verticale vers sa position haute escamotée, il entraîne avec lui le lit supérieur 14 qui, contre la gravité, se déplace aussi en translation verticale vers sa position haute escamotée.

De même, lorsque le lit inférieur 11 se déplace en translation verticale vers sa position basse déployée, il permet au lit supérieur 14 qui, par gravité, repose sur ou encore s'appuie contre le lit inférieur 11, de se déplacer aussi en translation verticale vers sa position basse déployée.

On comprend en outre que le lit supérieur 14 atteint sa position escamotée lorsque le lit inférieur 11 atteint lui-même sa position escamotée, le lit supérieur 14 reposant alors par gravité sur le lit inférieur 11.

Lorsque le lit inférieur 11 emmène en translation verticale le lit supérieur 14 de sa position escamotée vers sa position déployée, une surface inférieure du lit supérieur 14 est en appui contre le lit inférieur 11, notamment contre une surface supérieure du lit inférieur 11.

La surface inférieure du lit supérieur 14 est encore en appui sur la surface supérieure du lit inférieur 11, lorsque les lits inférieur 11 et supérieur 14 sont dans leur position escamotée.

Ainsi, l'enroulement/déroulement des sangles 13a, 13b, 13c, 13d autour de l'arbre d'entraînement 12 permet d'entraîner de manière directe les déplacements en translation verticale du lit inférieur 11 entre ses positions escamotée et déployée, et de provoquer de manière indirecte les déplacements en translation verticale du lit supérieur 14 entre ses positions escamotée et déployée par l'intermédiaire du lit inférieur 11. La rotation de l'arbre d'entraînement 12 autour de l'axe de rotation 17 dans le premier et dans le deuxième sens suffit donc à elle-seule pour provoquer les déplacements en translation des lits inférieur 11 et supérieur 14 entre leurs positions escamotée et déployée respectives.

Les moyens de guidage 15, 16 sont conçus pour guider en translation verticale le lit inférieur 11 et le lit supérieur 14, lorsque les lits inférieur 11 et supérieur 14 se déplacent en translation verticale entre leurs positions escamotée et déployée respectives.

Les moyens de guidage 15, 16 permettent aussi de positionner et de maintenir les lits inférieur 11 et supérieur 14 suivant les directions longitudinale X et transversale Y, voire même autour de la direction verticale Z.

Avantageusement, les moyens de guidage 15, 16 sont indépendants ou encore découplés des moyens d'entraînement 12, 13a, 13b, 13c, 13d.

Autrement dit, les fonctions d'entraînement en translation et de guidage en translation sont réalisées par des composants 12, 13a, 13b, 13c, 13d, 15, 16 matériellement différents du système 10, notamment par des composants 12, 13a, 13b, 13c, 13d, 15, 16 du système 10 qui ne coopèrent pas directement ensemble.

A contrario, au sens de l'invention, ne seraient par exemple pas découplés, des moyens de guidage coopérant directement avec les sangles 13a, 13b, 13c, 13d du système 10, ces dernières assurant l'entraînement en translation du lit inférieur 11 et du lit supérieur 14, par l'intermédiaire du lit inférieur 11, suivant la direction verticale Z.

Un tel découplage des fonctions d'entraînement en translation et de guidage en translation rend le système 10 plus aisément adaptable pour l'installer dans le véhicule de loisirs 100. En effet, ces deux fonctions pouvant être gérées indépendamment l'une de l'autre, elles imposent moins de contraintes pour l'installation du système 10 dans le véhicule de loisirs 100, de sorte qu'il est possible d'optimiser l'encombrement du système 10 dans le véhicule de loisirs.

Le système 10 est donc simple à mettre en oeuvre et ne comprend que peu de composants. Il peut ainsi être facilement installé dans le véhicule de loisirs 100. Le système 10 est en outre adaptable en fonction du véhicule de loisirs 100 dans lequel il est installé ou même en fonction de l'aménagement intérieur souhaité pour le véhicule de loisirs 100.

Les moyens de guidage 15, 16 sont conçus pour guider en translation verticale chacun des lits inférieur 11 et supérieur 14 par l'intermédiaire d'un 11a, 14a de leurs bords longitudinaux ou transversaux, les bords 11a, 14a des lits inférieur 11 et supérieur 14 guidés en translation par les moyens de guidage 15, 16 étant alignés verticalement l'un au-dessus de l'autre.

Les bords des lits inférieur 11 et supérieur 14 guidés en translation suivant la direction verticale Z par les moyens de guidage 15, 16 sont ici les bords longitudinaux 11a, 11b ; 14a, 14b.

Les moyens de guidage 15, 16 comprennent au moins un ensemble de guidage comportant un rail de guidage 15 destiné à être monté sur le véhicule de loisirs 100 et s'étendent parallèlement à la direction verticale Z et une paire de patins de guidage 16 conçus pour coopérer avec le rail de guidage 15, notamment pour glisser ou encore rouler le long du rail de guidage 15 (figure 3).

Le rail de guidage 15 de chaque ensemble de guidage est par exemple monté sur la paroi verticale arrière, du véhicule de loisirs 100.

Les moyens de guidage 15, 16 comprennent par exemple deux ensembles de guidage espacés l'un de l'autre selon la direction transversale Y ou la direction longitudinale X, ici la direction transversale Y, et agencés à proximité des coins des lits inférieur 11 et supérieur 14.

Un premier patin de guidage (non représenté), dit patin de guidage inférieur, est monté sur l'un 11a des bords longitudinaux ou transversaux du lit inférieur 11.

Le deuxième patin de guidage 16, dit patin de guidage supérieur, est monté sur le bord 14a du lit supérieur 14 agencé verticalement en regard du bord du lit inférieur 11 sur lequel le patin de guidage inférieur est monté (figure 3).

Le ou les ensembles de guidage permettent ainsi de guider en translation verticale les lits inférieur 11 et supérieur 14, lorsque les lits inférieur 11 et supérieur 14 se déplacent en translation verticale entre leurs positions escamotée et déployée respectives. Chaque ensemble de guidage permet en outre de guider simultanément le lit inférieur 11 et le lit supérieur 14 grâce au rail de guidage 15 commun entre les deux patins de guidage supérieur 16 et inférieur. Cela facilite le montage du système 10 et le rend aussi plus économique.

En variante, chaque ensemble de guidage comprend un rail de guidage 15 et un unique patin de guidage 16 conçus pour coopérer avec le rail de guidage 15 et monté sur le lit inférieur 11 ou le lit supérieur 14.

Ainsi, chaque ensemble de guidage permet de guider un seul parmi les lits inférieur 11 et supérieur 14.

Le patin de guidage 16 est identique au premier ou au deuxième patin de guidage décrit ci-dessus.

Chacun des lits inférieur 11 et supérieur 14 est par exemple guidé par deux ensembles de guidage espacés l'un de l'autre selon la direction transversale Y ou la direction longitudinale X et agencés à proximité des coins du lit inférieur 11 ou du lit supérieur 14.

L'axe de rotation 17 de l'arbre d'entraînement 12 est par exemple agencé perpendiculairement par rapport aux bords 11a, 14a du lit inférieur 11 et du lit supérieur 14 qui sont guidés en translation suivant la direction verticale Z par les moyens de guidage 15, 16.

De cette manière, lorsque les moyens de guidage 15, 16 guident les lits inférieur 11 et supérieur 14, chacun via l'un de ses bords longitudinaux 11a, 11b ; 14a, 14b, l'axe de rotation 17 de l'arbre d'entraînement 12 est agencé parallèlement à leurs bords transversaux 11c, 11d ; 14c, 14d. Cela permet en outre de libérer de tout obstacle, qu'il s'agisse des sangles 13a, 13b, 13c, 13d ou des moyens de guidage 15, 16, l'autre bord longitudinal 11b, 14b des lits inférieur et supérieur 11, 14 pour l'accès aux lits inférieur 11 et supérieur 14.

Au contraire, en variante, lorsque les moyens de guidage 15, 16 guident les lits inférieur 11 et supérieur 14, chacun via l'un de ses bords transversaux 11c, 11d ; 14c, 14d, l'axe de rotation 17 de l'arbre d'entraînement 12 est agencé parallèlement à leurs bords longitudinaux 11a, 11b ; 14a, 14b.

Cela participe au découplage entre les fonctions d'entraînement en translation et de guidage en translation suivant la direction verticale Z, l'arbre d'entraînement 12 et les moyens de guidage 15, 16 étant orientés différemment par rapport aux lits inférieur 11 et supérieur 14.

Le système 10 peut encore comprendre des premiers moyens de renvoi 18 conçus pour renvoyer la deuxième paire de sangles 13c, 13d provenant de l'arbre d'entraînement 12, verticalement vers le bord longitudinal 11a, 11b ou transversal 11c, 11d auquel elle est fixée, les premiers moyens de renvoi 18 étant situés au-dessus du lit inférieur 11.

La deuxième paire de sangles 13c, 13d associée aux premiers moyens de renvoi 18 correspond par exemple aux sangles 13c, 13d fixées au bord longitudinal 11a, 11b ou transversal 11c, 11d du lit inférieur 11 opposé au bord longitudinal 11b, 11a ou transversal 11d, 11c situé verticalement en regard de l'arbre d'entraînement 12 ou encore aligné verticalement avec ledit arbre d'entraînement 12.

Les premiers moyens de renvoi 18 sont par exemple montés sur le plafond du véhicule de loisirs 100.

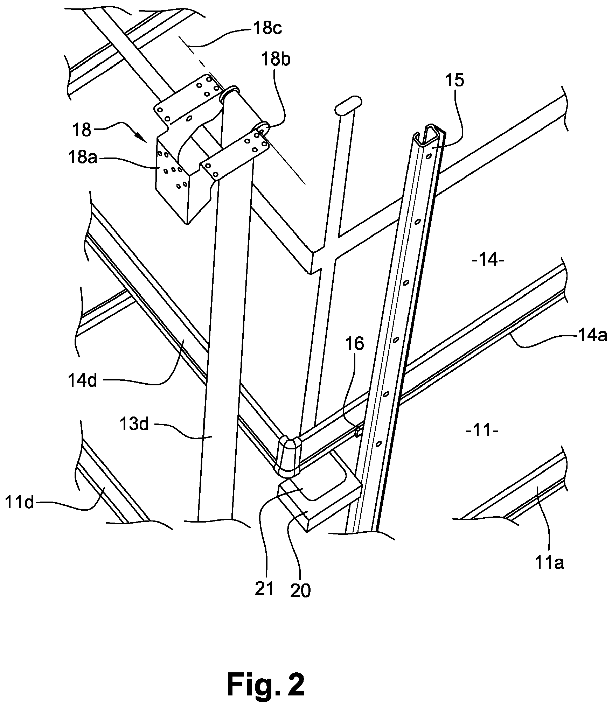

Les premiers moyens de renvoi 18 comprennent par exemple, pour chaque sangle 13c, 13d de la deuxième paire, un boîtier 18a monté sur le véhicule de loisirs 100, notamment sur le plafond du véhicule de loisirs 100, et un pallier 18b monté rotatif sur le boîtier 18a autour d'un axe de rotation 18c, parallèle à l'axe de rotation 17 de l'arbre d'entraînement 12 et autour duquel la deuxième paire de sangles 13c, 13d est enroulée (figure 2).

Lorsque l'axe de rotation 17 est agencé parallèlement aux bords transversaux 11c, 11d du lit inférieur 11, les premiers moyens de renvoi 18 peuvent encore être montés sur l'une des parois longitudinales 103 du véhicule de loisirs 100, notamment la paroi longitudinale 103 opposée à l'arbre d'entraînement 12.

Le système 10 peut aussi comprendre des deuxièmes moyens de renvoi 19 conçus pour renvoyer la deuxième paire de sangles 13c, 13d provenant de l'arbre d'entraînement 12, horizontalement vers les premiers moyens de renvoi 18, les deuxièmes moyens de renvoi 19 étant situés au-dessus de l'arbre d'entraînement 12.

Les deuxièmes moyens de renvoi 19 peuvent encore être conçus pour recevoir verticalement la deuxième paire de sangles 13c, 13d provenant de l'arbre d'entraînement 12.

Les deuxièmes moyens de renvoi 19 sont par exemple montés sur le plafond du véhicule de loisirs 100.

Les deuxièmes moyens de renvoi 19 comprennent par exemple, pour chaque sangle 13c, 13d de la deuxième paire, un boîtier 19a monté sur le véhicule de loisirs 100, notamment sur le plafond du véhicule de loisirs 100, et un pallier 19b monté rotatif sur le boîtier 19a autour d'un axe de rotation 19c, parallèle à l'axe de rotation 17 de l'arbre d'entraînement 12 et autour duquel la deuxième paire de sangles 13c, 13d est enroulée.

Lorsque l'axe de rotation 17 est agencé parallèlement aux bords transversaux 11c, 11d du lit inférieur 11, les deuxièmes moyens de renvoi 19 peuvent encore être montés sur l'une des parois longitudinales 103 du véhicule de loisirs 100, notamment la paroi longitudinale 103 agencée en regard de l'arbre d'entraînement 12 (figure 2).

Le lit supérieur 14 est agencé à distance du lit inférieur 11, lorsque les lits inférieur 11 et supérieur 14 sont en position déployée, de sorte à libérer un espace entre les lits inférieur 11 et supérieur 14. Ainsi, lorsque le lit inférieur 11 et le lit supérieur 14 sont en position déployée, le lit inférieur 11 et le lit supérieur 14 ne sont pas en contact l'un avec l'autre.

Pour cela, le système 10 comprend par exemple des moyens de blocage 20, 21 conçus pour bloquer le lit supérieur 14 en translation suivant la direction verticale Z vers le bas, lorsque le lit supérieur 14 est dans la position déployée.

Ainsi, lorsque le lit inférieur 11 est entraîné en translation verticale vers le haut depuis sa position déployée, il se déplace d'abord seul jusqu'à ce qu'il atteigne la position déployée du lit supérieur 14, le lit supérieur 14 étant jusqu'alors maintenu dans sa position déployée par les moyens de blocage 20, 21.

Lorsque le lit inférieur 11 atteint la position déployée du lit supérieur 14, il entre en contact avec le lit supérieur 14. Le lit inférieur 11 poursuivant ensuite sa course vers le haut, entraîne avec lui le lit supérieur 14 en translation verticale jusqu'à que les lits inférieur et supérieur atteignent ensemble leur position escamotée respective.

A l'inverse, lorsque le lit inférieur 11 est entraîné en translation verticale vers le bas depuis sa position escamotée, il entraîne avec lui en translation verticale le lit supérieur 14 jusqu'à ce que le lit supérieur 14 atteigne sa position déployée. Lorsque le lit supérieur 14 atteint sa position déployée, les moyens de blocage 20, 21 bloquent le lit supérieur 14 dans cette position, le lit inférieur 11 poursuivant quant à lui sa course vers le bas jusqu'à atteindre sa position déployée.

Les moyens de blocage 20, 21 peuvent comprendre une ou plusieurs premières pièces de blocage 20 montées sur le véhicule de loisirs 100.

Les premières pièces de blocage 20 en forme de taquets présentent une surface horizontale de blocage agencée en regard du lit supérieur 14, notamment de la surface inférieure du lit supérieur 14. La surface de blocage des premières pièces de blocage 20 est orientée vers le haut.

Les moyens de blocage 20, 21 peuvent en outre comprendre une deuxième pièce de blocage 21 associée à chacune des premières pièces de blocage 20.

La ou les deuxièmes pièces de blocage 21 sont montées d'un seul tenant avec le lit supérieur 14.

Les deuxièmes pièces de blocage 21 font horizontalement saillie depuis le lit supérieur 14. Les deuxièmes pièces de blocage 21 présentent par exemple la forme de pattes horizontales.

Les deuxièmes pièces de blocage font par exemple saillie depuis les bords longitudinaux 14a, 14b du lit supérieur 14. En variante, les deuxièmes pièces de blocage font saillie depuis les bords transversaux 14c, 14d du lit supérieur 14.

Les deuxièmes pièces de blocage 21 présentent une surface horizontale de blocage agencée en regard des premières pièces de blocage 20. La surface de blocage des deuxièmes pièces de blocage 21 est orientée vers le bas.

La surface de blocage des deuxièmes pièces de blocage 21 vient en appui contre la surface de blocage des premières pièces de blocage 20, lorsque le lit supérieur 14 se déplace en translation suivant la direction verticale Z vers le bas et atteint sa position déployée.

De cette manière, les moyens de blocage 20, 21 permettent de bloquer le lit supérieur 14 dans sa position déployée sans gêner les déplacements en translation verticale du lit inférieur 11 entre ses positions escamotée et déployée.

Les moyens de blocage 20, 21 comprennent par exemple quatre premières pièces de blocage 20 et quatre deuxièmes pièces de blocage 21, les deuxièmes pièces de blocage 21 s'étendant deux par deux depuis un même bord longitudinal 14a, 14b ou transversal 14c, 14d du lit supérieur 14, à proximité de coins opposés du lit supérieur 14, lesdits coins étant définis entre les bords longitudinaux 14a, 14b et les bords transversaux 14c, 14d dudit lit supérieur 14.

De cette manière, les moyens de blocage 20, 21 assure le maintien horizontal du lit supérieur 14, lorsque le lit supérieur 14 est dans la position déployée, notamment quels que soient les mouvements de l'utilisateur dormant dans le lit supérieur 14.

Le système 10 peut encore comprendre un moteur électrique 22 couplé avec l'arbre d'entraînement 12 autour de l'axe de rotation 17 dans le premier et dans le deuxième sens de rotation. Le moteur électrique 22 entraîne l'arbre d'entraînement 12 en rotation autour de l'axe de rotation 17 dans les premier et deuxième sens de rotation.

Le moteur électrique 22 est par exemple intégré à un circuit électrique (non représenté) comprenant notamment un générateur électrique et un interrupteur manoeuvrable par un utilisateur et par l'intermédiaire duquel le générateur électrique est relié au moteur électrique 22.

L'interrupteur comprend par exemple trois positions, une première position autorisant le passage du courant électrique vers le moteur électrique 22 afin de faire tourner l'arbre d'entraînement 12 dans le premier sens de rotation, une deuxième position interdisant le passage du courant vers le moteur électrique 22 et une troisième position autorisant le passage du courant électrique vers le moteur électrique 22 afin de faire tourner l'arbre d'entraînement 12 dans le deuxième sens de rotation.

Le lit supérieur 14 présente par exemple une forme identique à celle du lit inférieur 11.

L'un ou les deux bords longitudinaux 11a, 11b ; 14a, 14b des lits inférieur 11 et/ou supérieur 14 peuvent être droits.

Le bord longitudinal 11a, 14a des lits inférieur 11 et/ou supérieur 14 agencé en regard de la paroi transversale arrière 102 du véhicule de loisirs 100 est par exemple droit, afin d'épouser le forme de ladite paroi transversale arrière 102.

L'un ou les deux bords longitudinaux 11a, 11b ; 14a, 14b des lits inférieur 11 et/ou supérieur 14 peuvent encore présenter une partie courbe, notamment afin de faire varier les dimensions transversales des lits inférieur 11 et/ou supérieur 14 sur leur longueur. Il est ainsi possible d'obtenir des lits inférieur 11 et/ou supérieur 14 comprenant une première extrémité suivant leur axe d'extension longitudinale L₁, L₂ respectif présentant des dimensions transversales supérieures à celles d'une deuxième extrémité opposés à la première extrémité. Ainsi la première extrémité des lits inférieur 11 ou supérieur 14 peut accueillir la partie supérieure du corps de l'utilisateur qui a besoin de plus d'espace, tandis que la deuxième extrémité des lits inférieur 11 et supérieur 14 peut accueillir la partie inférieure du corps de l'utilisateur qui a besoin de moins d'espace.

Les bords transversaux 11c, 11d ; 14c, 14d des lits inférieur 11 et/ou supérieur 14 sont par exemple droits, par exemple afin d'épouser la forme des parois longitudinales 103 du véhicule de loisirs 100.

## Revendications

1. Système (10) de lits superposés pour véhicule de loisirs (100) comprenant :
- un lit inférieur (11) agencé horizontalement par rapport à une direction verticale (Z) et comprenant deux bords longitudinaux (11a, 11b), s'étendant globalement suivant un axe d'extension longitudinale (L₁) et deux bords transversaux (11c, 11d), s'étendant transversalement par rapport à l'axe d'extension longitudinale (L₁),
- des moyens d'entraînement (12, 13a, 13b, 13c, 13d) conçus pour entraîner en translation verticale le lit inférieur (11) entre une position haute, dite position escamotée, et une position basse, dite position déployée, les moyens d'entraînement (12, 13a, 13b, 13c, 13d) comprenant :
∘ un arbre d'entraînement (12) destiné à être monté sur le véhicule de loisirs (100), l'arbre d'entraînement (12) étant conçu pour tourner autour d'un axe de rotation (17) horizontal, agencé parallèlement ou perpendiculairement par rapport à l'axe d'extension longitudinale (L₁) du lit inférieur (11), dans un premier sens de rotation et dans un deuxième sens de rotation opposé,
∘ une pluralité de sangles (13a, 13b, 13c, 13d) ou câbles ou chaînes fixés d'une part à l'arbre d'entraînement (12) et d'autre part aux bords longitudinaux (11a, 11b) et/ou transversaux (11c, 11d) du lit inférieur (11), de sorte à suspendre le lit inférieur (11) à l'arbre d'entraînement (12), les sangles (13a, 13b, 13c, 13d), câbles ou chaînes s'enroulant et se déroulant autour de l'arbre d'entraînement (12), respectivement lorsque l'arbre d'entraînement (12) tourne autour de l'axe de rotation (17) dans le premier sens de rotation et dans le deuxième sens de rotation, de sorte à entraîner le lit inférieur (11) en translation verticale vers la position escamotée et vers la position déployée respectivement,
- un lit supérieur (14) agencé horizontalement et superposé au-dessus du lit inférieur (11), le lit supérieur (14) comprenant deux bords longitudinaux (14a, 14b) dont chacun est agencé verticalement en regard de l'un des bords longitudinaux (11a, 11b) du lit inférieur (11), et deux bords transversaux (14c, 14d) dont chacun est agencé verticalement en regard de l'un des bords transversaux (11c, 11d) du lit inférieur (11),
le lit supérieur (14) étant conçu pour se déplacer en translation verticale entre une position haute, dite position escamotée, et une position basse, dite position déployée, sous l'effet de son poids,
le lit inférieur (11) étant conçu pour entraîner en translation verticale le lit supérieur (14) entre sa position escamotée et sa position déployée, lorsque le lit inférieur (11) est entraîné en translation verticale entre sa position escamotée et sa position déployée,
- des moyens de guidage (15, 16) en translation du lit inférieur (11) et du lit supérieur (14), lorsque les lits inférieur (11) et supérieur (14) se déplacent en translation verticale entre leurs positions escamotée et déployée, les moyens de guidage (15, 16) étant indépendants des moyens d'entraînement (12, 13a, 13b, 13c, 13d).

2. Système (10) selon la revendication 1, dans lequel l'arbre d'entraînement (12) est situé au-dessus des lits inférieur (11) et supérieur (14) et les sangles, câbles ou chaînes (13a, 13b, 13c, 13d) sont situés au-dessus du lit inférieur (11).

3. Système (10) selon la revendication 1 ou la revendication 2, dans lequel les moyens de guidage (15, 16) sont conçus pour guider en translation verticale chacun des lits inférieur (11) et supérieur (14) par l'intermédiaire d'un (11a, 14a) de leurs bords longitudinaux ou transversaux, les bords (11a, 14a) des lits inférieur (11) et supérieur (14) guidés en translation par les moyens de guidage (15, 16) étant agencés verticalement en regard l'un de l'autre.

4. Système (10) selon la revendication 3, dans lequel les bords (11a, 14a) des lits inférieur (11) et supérieur (14) guidés en translation par les moyens de guidage (15, 16) sont les bords longitudinaux (11a, 11b, 14a, 14b).

5. Système (10) selon la revendication 3 ou la revendication 4, dans lequel l'axe de rotation (17) de l'arbre d'entraînement (12) est agencé orthogonalement par rapport aux bords (11a, 14a) du lit inférieur (11) et du lit supérieur (14) qui sont guidés en translation par les moyens de guidage (15, 16).

6. Système (10) selon l'une des revendications 1 à 5, dans lequel l'axe de rotation (17) de l'arbre d'entraînement (12) est agencé orthogonalement à l'axe d'extension longitudinale (L₁) du lit inférieur (11) et/ou est aligné verticalement avec l'un (11c) des bords transversaux du lit inférieur (11).

7. Système (10) selon l'une des revendications 1 à 6, comprenant deux paires de deux sangles (13a, 13b, 13c, 13d), câbles ou chaînes, une première paire étant fixée à l'un (11c) des bords du lit inférieur (11) agencés globalement parallèlement à l'axe de rotation (17) de l'arbre d'entraînement (12), une deuxième paire étant fixée à l'autre (11d) des bords agencés globalement parallèlement à l'axe de rotation (17) de l'arbre d'entraînement (12).

8. Système (10) selon la revendication 7, comprenant des premiers moyens de renvoi (18) conçus pour renvoyer la deuxième paire de sangles (13c, 13d), câbles ou chaînes provenant de l'arbre d'entraînement (12), verticalement en direction du bord longitudinal (11a, 11b) ou transversal (11c, 11d) du lit inférieur (11) auquel elle est fixée, les premiers moyens de renvoi (18) étant situés au-dessus du lit inférieur (11).

9. Système (10) selon la revendication 8, comprenant des deuxièmes moyens de renvoi (19) conçus pour renvoyer la deuxième paire de sangles (13c, 13d), câbles ou chaînes provenant de l'arbre d'entraînement (12), horizontalement en direction des premiers moyens de renvoi (18), les deuxièmes moyens de renvoi (19) étant situés au-dessus de l'arbre d'entraînement (12).

10. Système (10) selon la revendication 9, dans lequel les deuxièmes moyens de renvoi (19) sont conçus pour recevoir verticalement la deuxième paire de sangles (13c, 13d), câbles ou chaînes provenant de l'arbre d'entraînement (12).

11. Système (10) selon l'une des revendications 8 à 10, dans lequel la deuxième paire de sangles (13c, 13d), câbles ou chaînes est fixée au bord longitudinal (11a, 11b) ou transversal (11c, 11d) du lit inférieur (11) opposé au bord longitudinal (11b, 11a) ou transversal (11d, 11c) situé verticalement en regard de l'arbre d'entraînement (12).

12. Système selon l'une des revendications 1 à 11, dans lequel le lit supérieur (14) est agencé à distance du lit inférieur (11), lorsque le lit inférieur (11) et le lit supérieur (14) sont en position déployée, le système (10) comprenant en outre des moyens de blocage (20, 21) conçus pour bloquer le lit supérieur (14) en translation verticale vers le bas, lorsque le lit supérieur (14) atteint sa position déployée.

13. Véhicule de loisirs (100) s'étendant d'arrière en avant suivant une direction longitudinale (X) horizontale, le véhicule de loisirs (100) comprenant un plancher (101) horizontal, une paroi transversale arrière (102) s'étendant depuis le plancher (101) et agencée sensiblement perpendiculairement par rapport à la direction longitudinale (X) et deux parois longitudinales (103) s'étendant depuis le plancher (101) de part et d'autre de la paroi transversale arrière (102) et agencées sensiblement parallèlement par rapport à la direction longitudinale (X), le véhicule de loisirs (100) comprenant en outre un système (10) de lits superposés selon l'une des revendications 1 à 12.

14. Véhicule de loisirs (100) selon la revendication 13, dans lequel :
- l'axe d'extension longitudinale (L₁) du lit inférieur (11) est agencé perpendiculairement par rapport à la direction longitudinale (X) du véhicule de loisirs (100),
et/ou
- le système (10) est installé dans une partie arrière du véhicule de loisirs (10), et/ou
- l'arbre d'entraînement (12) est monté sur l'une des parois longitudinales (103) du véhicule de loisirs (100).

15. Véhicule de loisirs (100) selon la revendication 13 ou la revendication 14, dans lequel les moyens de guidage (15, 16) comprennent au moins un ensemble de guidage comprenant lui-même un rail vertical de guidage (15) monté sur la paroi transversale arrière (102) du véhicule de loisirs (100) et une paire de patins de guidage (16) conçue pour coopérer avec le rail de guidage (15), un premier patin de guidage étant monté sur l'un (11a) des bords longitudinaux ou transversaux du lit inférieur (11), le deuxième patin de guidage (16) étant monté sur le bord (14a) du lit supérieur (14) agencé en regard du bord (11a) du lit inférieur (11) sur lequel est monté le premier patin de guidage.
